# EUROPÄISCHE PATENTSCHRIFT

(11) **EP 1 261 843 B1**
(45) Veröffentlichungstag und Bekanntmachung des Hinweises auf die Patenterteilung: **22.06.2016**
(21) Anmeldenummer: 01915013.5
(22) Anmeldetag: 16.02.2001
(51) Int. Cl.: G01D 5/14

(54) **MESSVORRICHTUNG ZUR BERÜHRUNGSLOSEN ERFASSUNG EINES FERROMAGNETISCHEN GEGENSTANDES**
MEASURING DEVICE FOR CONTACTLESSLY DETECTING A FERROMAGNETIC OBJECT
DISPOSITIF DE MESURE SERVANT A LA DETECTION SANS CONTACT D'UN OBJET FERROMAGNETIQUE

(30) Priorität: 26.02.2000 DE 10009173
(43) Veröffentlichungstag der Anmeldung: 04.12.2002
(73) Patentinhaber: ROBERT BOSCH GMBH, 70442 Stuttgart (DE)
(72) Erfinder: STEINRUECKEN, Heinrich, 71640 Ludwigsburg (DE); HEISENBERG, David, 70839 Gerlingen (DE); SCHULZ, Michael, 59368 Werne (DE); RETTIG, Rasmus, 70839 Gerlingen (DE); HAAS, Martin, 71720 Oberstendfeld (DE); GINTNER, Klemens, 71638 Ludwigsburg (DE)
(86) Internationale Anmeldenummer: PCT/DE2001/000589
(87) Internationale Veröffentlichungsnummer: WO 2001/063213

(56) Entgegenhaltungen:
- EP-A- 0 283 291
- WO-A-97/43603
- US-A- 4 935 698
- US-A- 5 321 355

## Beschreibung

### Stand der Technik

Die vorliegende Erfindung betrifft eine Messvorrichtung zur berührungslosen Erfassung eines ferromagnetischen Gegenstandes nach dem Oberbegriff des Anspruchs 1.

Derartige Messvorrichtungen umfassen im Allgemeinen eine Anordnung einer Magnetstruktur und einen integrierten Schaltkreischip mit einem Hall-Element, wobei der Chip an einem Ende der Magnetstruktur und in dem magnetischen Feld angeordnet ist, das durch diese Magnetstruktur gebildet wird. Das Hall-Element erzeugt ein elektrisches Signal bezogen auf die Stärke des magnetischen Feldes senkrecht zur Ebene des Hall-Elements. Wenn sich nun ein ferromagnetischer Gegenstand dem Hall-Element nähert, ändert sich die Stärke des magnetischen Feldes senkrecht zum Hall-Element. Dadurch kann der Abstand des ferromagnetischen Gegenstands zum Hall-Element durch ein durch das Hall-Element erzeugtes elektrisches Signal wiedergegeben werden. Derartige Hall-Sensoren werden zur Erfassung von Drehzahlen oder bestimmten Positionen von gezahnten Geberrädern (Zahnrädern) bei Kraftfahrzeugen z.B. für ein Antiblockiersystem oder eine Motorsteuerung eingesetzt.

Beispielsweise wurden zur Verwirklichung eines kleinen Offset-Feldes Messvorrichtungen mit zwei eng benachbarten Hall-Elementen vorgeschlagen, welche elektrisch derart miteinander verbunden sind, dass sie sich gegenseitig im Grundzustand aufheben. Dies ermöglicht die Erzeugung eines guten Signals, jedoch müssen die beiden Hall-Elemente absolut identisches Verhalten aufweisen, was in der Serienproduktion nur eingeschränkt möglich ist.

Weiter ist aus der DE-196 22 561 ein Hall-Effekt-Sensor bekannt, bei dem ein auf einem Schaltkreischip angeordnetes Hall-Element zwischen einem Geberrad und einer Magnetstruktur angeordnet ist. Dabei ist die Magnetstruktur derart aufgebaut, dass ein Nordpol und ein Südpol nebeneinander liegen und beide zum Hall-Element benachbart angeordnet sind.

Weiter ist aus der EP-0 273 129 ein Magnetfeldgeber bekannt, bei dem als Permanentmagnet ein Ringmagnet vorgesehen ist. Ein Hall-Generator ist der Öffnung des Ringmagneten derart zugeordnet, dass die Achse des Hall-Generators und die Achse des Ringmagneten im Wesentlichen zusammenfallen und der Hall-Generator bei offenem Magnetkreis in einem durch Feldverdrängung innerhalb des Ringmagneten gegebenen Raum minimaler magnetischer Induktion angeordnet ist.

### Würdigung

In der US 4,935,698 wird ein Sensor beschrieben, bei dem ein becherförmiges Polstück mit seinem Boden auf einem Pol eines Permanentmagneten aufgesetzt ist. Im Inneren des Polstücks sind am Boden angeordnet zwei in Differenzschaltungen verschaltete Hallelemente. Angestrebt wird hier eine relative Unabhängigkeit der Messsignale vom Abstand der Hallelemente zum sich vorbeibewegenden Geberrad.

In der EP 0283291 A2 wird in der Figur 3 ein Permanentmagnet von einer Kappe umgeben, auf der sich zwei Hallelemente in Differenzschaltung befinden. Hierdurch wird eine relativ einheitliche magnetische Flussdichte angestrebt.

### Vorteile der Erfindung

Eine erfindungsgemäße Vorrichtung zur berührungslosen Erfassung eines ferromagnetischen Gegenstands mit den kennzeichnenden Merkmalen des Anspruchs 1 hat dem gegenüber den Vorteil, dass durch das an einer Seite eines Permanentmagneten zwischen dem Permanentmagneten und einem Hall-Element angeordnete weichmagnetische Bauteil ein Teil des magnetischen Flusses durch das weichmagnetische Bauteil abgeleitet wird. Somit wird in dem Raum um das am Permanentmagneten angeordnete weichmagnetische Bauteil herum die magnetische Flussdichte reduziert. Dadurch kann ein Magnetkreis mit einem minimierten Offset-Feld realisiert werden. Bei eng benachbarten Hall-Elementen, insbesondere bei Messung nach dem Differenzialprinzip, ist die Verwendung von Hall-Elementen mit relativ großer Toleranzbreite möglich, da sich das unterschiedliche Verhalten der Hall-Elemente relativ gering auswirkt. Weiterhin ist an dem erfindungsgemässen Aufbau der Messvorrichtung vorteilhaft, dass durch das am Permanentmagneten angeordnete weichmagnetische Bauteil eine starke Veränderung der magnetischen Flussdichte bei Anwesenheit eines ferromagnetischen Gegenstands auftritt. Das heißt, durch die große relative Änderung der magnetischen Flussdichte, welche bei Annäherung eines ferromagnetischen Gegenstandes auftritt, kann eine größere Genauigkeit der Messvorrichtung erreicht werden. Auch weist die erfindungsgemäße Messvorrichtung einen einfachen Aufbau auf, da nur ein Hall-Element notwendig ist und der Aufbau mit einem einzigen Permanentmagneten und einem einfach geformten weichmagnetischen Bauteil realisierbar ist. Beispielsweise kann hierbei ein einfacher stabförmiger oder zylinderförmiger Permanentmagnet verwendet werden.

Erfindungsgemäß ist das weichmagnetische Bauteil an einer Seite des Permanentmagneten angeordnet, welche in Richtung des zu erfassenden ferromagnetischen Gegenstandes gerichtet ist. Hierdurch lässt sich ein besonders einfacher Aufbau der Messvorrichtung realisieren, da das weichmagnetische Bauteil einfach an einer Stirnseite des Permanentmagneten angeordnet werden kann. Dadurch kann das Hall-Element einfach in einem Spalt zwischen dem weichmagnetischen Bauteil und dem zu erfassenden ferromagnetischen Gegenstand angeordnet werden.

Erfindungsgemäß ist das weichmagnetische Bauteil als kappenförmiges Element ausgebildet und weist eine Aussparung zur Aufnahme des Permanentmagneten auf. Dadurch kann eine einfache Verbindung zwischen dem weichmagnetischen Bauteil und dem Permanentmagneten z.B. auch durch Magnetkräfte realisiert werden. Es ist jedoch auch möglich, dass das weichmagnetische Bauteil mit dem Permanentmagneten mittels Kleben oder Löten oder Schweißen verbunden wird.

Gemäß einem bevorzugten Ausführungsbeispiel weist das weichmagnetische Bauteil eine zentrische Öffnung auf, welche in Richtung des Hall-Elements geöffnet ist. Dadurch kann eine Messvorrichtung realisiert werden, welche ein besonders geringes Offset-Feld aufweist.

Vorzugsweise weist das weichmagnetische Bauteil eine halbkugelförmige Öffnung auf, welche in Richtung des Hall-Elements geöffnet ist. Hierdurch lässt sich insbesondere ein geringes Offset-Feld bei Verwendung eines zylindrischen Stabmagneten realisieren.

Besonders günstig ist ein rotationssymmetrischer Aufbau, da hierdurch ein Einbau der Messvorrichtung unabhängig von der jeweiligen Lage des Hall-Elements erfolgen kann.

Vorzugsweise ist das weichmagnetische Bauteil aus mehreren Lochscheiben gebildet. Dadurch kann mit einfachen Bauteilen eine erfindungsgemäße Messvorrichtung realisiert werden, wobei die Bauteile standardisiert werden können und somit auf einfache Weise unterschiedliche Messvorrichtungen für verschiedene Anforderungen herstellbar sind.

Gemäß einer bevorzugten Ausgestaltung der vorliegenden Erfindung ist das Hall-Element zwischen einem ersten Permanentmagneten und einem zweiten Permanentmagneten angeordnet. Dabei ist der zweite Magnet derart angeordnet, dass er zwischen dem Hall-Element und dem zu erfassenden ferromagnetischen Gegenstand liegt. Durch diese Anordnung ist es möglich, einen magnetischen Nullpunkt an der Position des Hall-Elements zu erzeugen. Hierdurch kann insbesondere eine Abgleichmöglichkeit realisiert werden.

Gemäß einer weiteren bevorzugten Ausführungsform der erfindungsgemäßen Messvorrichtung ist der Permanentmagnet parallel zu dem zu erfassenden ferromagnetischen Gegenstand ausgerichtet, sodass dessen Nordpol und Südpol in einer Ebene senkrecht zum ferromagnetischen Gegenstand liegt. Dabei ist das weichmagnetische Bauteil seitlich an den Stirnseiten des Permanentmagneten angeordnet. Das Hall-Element ist dabei in einem im weichmagnetischen Bauteil gebildeten Spalt angeordnet. Vorzugsweise ist hierbei an beiden Stirnseiten des Permanentmagneten ein weichmagnetisches Bauteil vorgesehen. Durch diese Ausgestaltung der weichmagnetischen Bauteile und der Anordnung des Permanentmagneten zum zu erfassenden ferromagnetischen Gegenstand ergibt sich ohne das Vorhandensein des ferromagnetischen Gegenstandes ein relativ großes Magnetfeld im Hall-Element in dessen sensitiver Richtung. Wenn nun ein ferromagnetischer Gegenstand in die Nähe des Permanentmagneten kommt, wird ein Teil des magnetischen Flusses nicht mehr durch das weichmagnetische Bauteil und das Hall-Element geführt, sondern wird über den ferromagnetischen Gegenstand geführt. Dadurch wird eine Reduzierung des Magnetfelds im Hall-Element erreicht. Somit nimmt in dieser Ausführungsform das Magnetfeld im Hall-Element einen Minimalwert an, wenn ein ferromagnetischer Gegenstand in die Nähe des Permanentmagneten kommt.

### Zeichnung

Mehrere Ausführungsbeispiele sind in der Zeichnung dargestellt und werden in der nachfolgenden Beschreibung näher erläutert.
Figur 1 zeigt eine Seitenansicht durch eine Messvorrichtung gemäß einem ersten Ausführungsbeispiel,
Figur 2 zeigt eine Draufsicht einer Messvorrichtung gemäß einem zweiten Ausführungsbeispiel,
Figur 3 zeigt eine Seitenansicht durch eine Messvorrichtung gemäß einem dritten Ausführungsbeispiel,
Figur 4 zeigt eine Seitenansicht einer Messvorrichtung gemäß einem vierten Ausführungsbeispiel,
Figur 5 zeigt eine Schnittdarstellung durch eine Messvorrichtung gemäß der vorliegenden Erfindung,
Figur 5a zeigt einen Schnitt durch eine weitere Variante, Figur 6 zeigt eine Schnittdarstellung durch eine Messvorrichtung gemäß einem sechsten Ausführungsbeispiel,
Figur 7 zeigt eine vergrößerte Teilschnittsansicht der in Figur 6 dargestellten Messvorrichtung,
Figur 8 zeigt eine Schnittdarstellung durch eine Messvorrichtung gemäß einem siebten Ausführungsbeispiel,
Figur 9 zeigt eine Schnittdarstellung durch eine Messvorrichtung gemäß einem achten Ausführungsbeispiel,
Figur 10 zeigt eine Darstellung der Abhängigkeit der magnetischen Induktion von der Breite des Luftspalts bei dem in Figur 9 dargestellten Ausführungsbeispiel,
Figur 11 zeigt eine Schnittdarstellung durch eine Messvorrichtung gemäß einem neunten Ausführungsbeispiel,
Figur 12 zeigt eine Schnittdarstellung durch eine Messvorrichtung gemäß einem zehnten Ausführungsbeispiel,
Figur 13 zeigt eine Schnittdarstellung durch eine Messvorrichtung gemäß einem elften Ausführungsbeispiel,
Figur 14 zeigt eine Abhängigkeit der magnetischen Induktion von der Breite des Luftspalts bei einer Messvorrichtung gemäß dem in Figur 13 dargestellten Ausführungsbeispiel,
Figur 15 zeigt die Abhängigkeit des magnetischen Hubs von der Breite des Luftspalts der in Figur 13 dargestellten Messvorrichtung,
Figur 16 zeigt eine Schnittdarstellung durch eine Messvorrichtung gemäß einem zwölften Ausführungsbeispiel, und
Figur 17 zeigt eine vergrößerte Schnittdarstellung der in Figur 16 dargestellten Messvorrichtung.

### Beschreibung der Ausführungsbeispiele

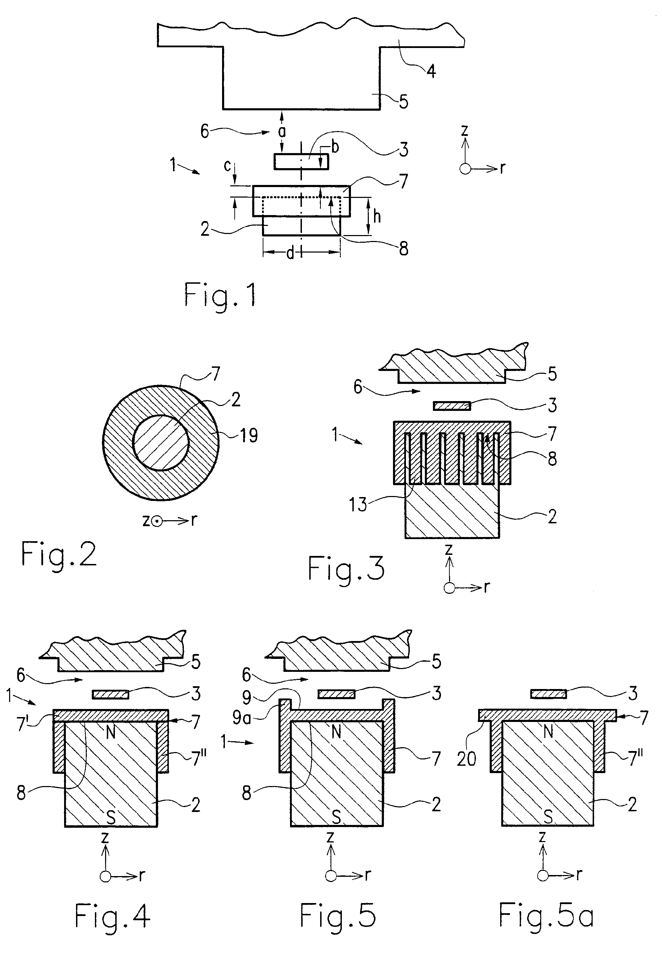

Die Erfindung ist in der Figur 5 dargestellt. Die übrigen Beispiele dienen zur Erläuterung und zum Verständnis der Funktion. Wie in Figur 1 gezeigt, umfasst eine Messvorrichtung 1 gemäß einem ersten Ausführungsbeispiel einen Permanentmagneten 2, welcher als Stabmagnet mit einem Durchmesser d und einer Höhe h ausgebildet ist. Weiter umfasst die Messvorrichtung 1 ein Hall-Element 3 und ein weichmagnetisches Bauteil 7. Das weichmagnetische Bauteil 7 weist eine zylinderförmige Aussparung 8 auf, welche zur Aufnahme des Permanentmagneten 2 dient. Wie in Figur 1 gezeigt, wird der Permanentmagnet 2 bis zur Hälfte seiner Höhe h durch das weichmagnetische Bauteil 7 abgedeckt.

Statt eines Hall-Elements können auch andere magnetfeldempfindliche Elemente verwendet werden,wie z.B. magnetoresistive Sensoren (anisotroper magnetoresistiver Effekt oder giant magnetioresistive effect), Feldplatten. Ferner können auch mehrere Elemente als Differenzschaltung verwendet werden.

Wie in Figur 1 gezeigt, ist das Hall-Element 3 in einem Luftspalt 6 zwischen dem weichmagnetischen Bauteil 7 und einem Zahn 5 eines Geberrades 4 in einem Abstand a vom Zahn 5 und einem Abstand b vom weichmagnetischen Bauteil 7 angeordnet. Der Abstand b sollte möglichst gering, vozugsweise Null sein. Hierbei steht das weichmagnetische Bauteil 7 um einen Betrag c über das stirnseitige Ende des Permanentmagneten 2 über.

Durch das Vorsehen des weichmagnetischen Bauteils 7 zwischen dem Hall-Element 3 und dem Permanentmagneten 2 weist die Messvorrichtung 1 einen Magnetkreis mit einem sehr geringen Offset-Feld (sog. back-bias-reduzierter Magnetkreis) auf. Das weichmagnetische Bauteil 7 dient hierbei als Flussleitelement, welches einen Teil des magnetischen Flusses aus der Stirnseite des Permanentmagneten 2 ableitet. Dadurch wird in dem Luftspalt 6 oberhalb der Stirnseite des Permanentmagneten 2 die magnetische Flussdichte reduziert und das Hall-Element 3 kann in einem Bereich mit geringer magnetischer Induktion in Z-Richtung, d.h. der sensitiven Achse des Hall-Elements, angeordnet werden. Wenn nun ein Zahn 5 eines Geberrades 4 in die Nähe des Hall-Elements gebracht wird, wird der magnetische Fluss in Z-Richtung im Hall-Element 3 erhöht und führt somit zu einer betragsmäßig höheren Hall-Spannung. Es ermöglicht das Erfassen des Vorhandenseins eines Zahnes 5 und die Abgabe eines entsprechenden Signals an eine Steuerungseinrichtung.

In den nachfolgenden Tabellen 1 und 2 sind die Messergebnisse bei einem Vergleich einer Messvorrichtung mit einem weichmagnetischen Bauteil 7 und ohne ein weichmagnetisches Bauteil dargestellt. Hierbei sind in Tabelle 1 die Messwerte für einen Aufbau angegeben, welcher der in Fig. 1 dargestellten Messvorrichtung entspricht. In Tabelle 2 sind die Messwerte für eine Messvorrichtung ohne weichmagnetisches Bauteil angegeben, wobei der Aufbau der Messvorrichtung ansonsten der in Figur 1 gezeigten (ohne weichmagnetisches Bauteil) entspricht.

**Tabelle 1: Messergebnisse mit weichmagnetischem Bauteil 7**

| Luftspalt a in mm | B_{z ohne Zahn} in mT | B_{z mit Zahn} in mT | ΔB_{z} (magn. Hub) in mT |
|---|---|---|---|
| 0 | 26,5 | 55,3 | 28,8 |
| 1,0 | 26,5 | 43,0 | 16,5 |
| 2,0 | 26,5 | 36,2 | 9,7 |
| 3,0 | 26,5 | 31,9 | 5,4 |
| 4,0 | 26,5 | 29,4 | 2,9 |
| 5,0 | 26,5 | 28,4 | 1,9 |

| | | | |
|---|---|---|---|
| ΔB_{z} = B_{z mit Zahn} B_{z ohne Zahn} Material des Permanentmagneten: Samarium-Cobalt b = 1,5 mm (Abstand Stirnfläche des Permanentmagneten mit weichmagnetischem Bauteil zum Hall-Element) B_{z}: magnetische Flussdichte in Z-Richtung am Ort des Hall-Elements | | | |

**Tabelle 2: Messergebnisse ohne weichmagnetisches Bauteil 7**

| Luftspalt a in mm | B_{z ohne Zahn} in mT | B_{z mit zahn} in mT | ΔB_{z} (magn.Hub) in mT |
|---|---|---|---|
| 0 | 22,7 | 39,8 | 17,1 |
| 1,0 | 22,7 | 32,6 | 9,9 |
| 2,0 | 22,7 | 28,8 | 6,1 |
| 3,0 | 22,7 | 26,7 | 4,0 |
| 4,0 | 22,7 | 25,2 | 2,5 |
| 5,0 | 22,7 | 24,5 | 1,8 |

| | | | |
|---|---|---|---|
| Material des Permanentmagneten: Hartferrit b = 2,5 mm (Abstand Stirnfläche des Permanentmagneten zu Hall-Element) B_{z}: Magnetische Flussdichte in Z-Richtung am Ort des Hall-Elements ΔB_{z} = B_{z mit Zahn} - B_{z ohne Zahn} | | | |

Wie sich aus einem Vergleich der Messwerte in Tabelle 1 und Tabelle 2 ergibt, weist die Messvorrichtung mit weichmagnetischem Bauteil 3 bei einem vergleichbaren niedrigen Offset-Magnetfeld (B_{z ohne Zahn} = 26, 5 mT: B_{z ohne Zahn} = 22,7 mT) eine deutlich höhere Veränderung ΔB_{z} des Magnetfeldes auf. Dabei ist ΔB_{z} mit weichmagnetischem Bauteil um durchschnittlich ca. 35% größer als der Wert ΔB_{z} ohne weichmagnetisches Bauteil im interessierenden Luftspaltbereich von ca. 1 mm bis 4 mm. Es kann somit das Vorhandensein eines ferromagnetischen Gegenstands im Bereich der Messvorrichtung mit größerer Sicherheit aufgrund der größeren relativen Änderung der magnetischen Induktion B festgestellt sowie der Abstand des ferromagnetischen Gegenstandes genauer bestimmt werden.

Figur 2 zeigt eine Draufsicht einer Messvorrichtung gemäß einem zweiten Ausführungsbeispiel. Der besseren Darstellbarkeit wegen ist dabei das Hall-Element nicht gezeigt. Im Wesentlichen entspricht die Messvorrichtung gemäß dem zweiten Ausführungsbeispiel. Im Unterschied dazu, weist jedoch die Messvorrichtung gemäß dem zweiten Ausführungsbeispiel im weichmagnetischen Bauteil 7 eine zentrische Durchgangsöffnung 19 auf. Dadurch weist der obere Bereich des weichmagnetischen Bauteils 7, d.h. der Bereich, welcher zum Hall-Element 3 gerichtet ist, eine zylinderförmige Ringform auf.

In der schematischen Seitenansicht von Figur 3 ist eine Messvorrichtung gemäß einem dritten Ausführungsbeispiel dargestellt. Der Aufbau dieser Messvorrichtung entspricht im Wesentlichen der in Fig. 1 gezeigten Messvorrichtung. Im Unterschied dazu ist jedoch das weichmagnetische Bauteil 7 anders ausgebildet. Es weist an seinem äußeren Umfangsrand zusätzlich längliche Aussparungen 13 auf, welche am gesamten Umfang des weichmagnetischen Bauteils 7 gebildet sind. Hierdurch ergeben sich fertigungstechnische Vorteile. Mittels dieser Aussparung wird eine andere magnetische Flussdichte im Bereich des Hall-Elements 3 bei Nichtvorhandenseins eines ferromagnetischen Gegenstands bzw. Zahns 5 erhalten.

Figur 4 zeigt eine Schnittansicht einer Messvorrichtung gemäß einem vierten Ausführungsbeispiel. Im Gegensatz zu den vorher beschriebenen Ausführungsbeispielen ist das weichmagnetische Bauteil 7 nicht mehr einstückig ausgeführt. Wie in Figur 4 gezeigt, weist das weichmagnetische Bauteil 7 einen Deckel 7' und einen ringförmigen Zylinderabschnitt 7" auf, welcher einen Teil des Permanentmagneten 2 umgibt.

Figur 5 zeigt eine schematische Schnittdarstellung einer erfindungsgemäßen Messvorrichtung 1 gemäß einem fünften Ausführungsbeispiel. Bei diesem Ausführungsbeispiel ist das weichmagnetische Bauteil 7 derart ausgebildet, dass es neben der Aussparung auch zur Aufnahme des Permanentmagneten 2 eine an der Stirnseite des weichmagnetischen Bauteils 7 angeordnete Aussparung 9 mit der Wandung 9a aufweist. Wie in Figur 5 gezeigt, das Hall-Element 3 über der Aussparung 9 angeordnet. Das Bauteil 7 kann auch aus mehreren Teilen zusammengesetzt sein.

In der Variante nach Figur 5a weist das Bauteil 7 einen umlaufenden Fortsatz 20 auf. Dieser Fortsatz 20 ragt über die ringförmigen Zylinderabschnitte 7" hinaus. Von der Funktion her entspricht der Fortsatz 20 der Wandung 9a in Figur 5. Dadurch wird eine magnetische Sättigung in den Randbereichen, d.h. im Bereich des Übergangs im Bauteil 7 von der Stirnseite zu den Mantelbereichen vermieden.

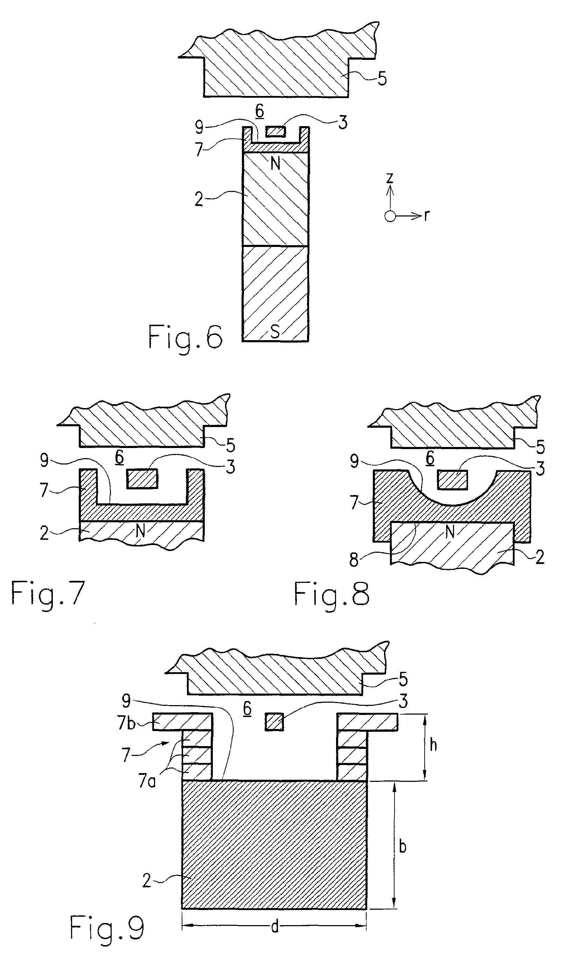

In den Figuren 6 und 7 ist ein sechstes Ausführungsbeispiel der Messvorrichtung 1 dargestellt. Im Unterschied zu der in Figur 5 gezeigten Messvorrichtung weist das weichmagnetische Bauteil 7 keine Aussparung zur Aufnahme des Permanentmagneten auf, sondern ist direkt an der Stirnseite des Permanentmagneten 2 angeordnet. Das weichmagnetische Bauteil 7 weist ebenfalls eine zum Zahn 5 offene Aussparung 9 auf, in welcher das Hall-Element 3 zumindest teilweise angeordnet ist.

Figur 8 zeigt ein siebtes Ausführungsbeispiel einer Messvorrichtung. Dieses Ausführungsbeispiel entspricht im Wesentlichen dem in Figur 7 gezeigten Ausführungsbeispiel, mit der Ausnahme, dass die Aussparung 9 des weichmagnetischen Bauteils 7 halbkugelförmig gebildet ist. Es wäre auch eine andere Form einer Aussparung möglich, z.B. kegelstumpfförmig, kegelförmig, konisch etc. Wichtig ist, dass in diesem Bereich eine Verringerung der Dicke erreicht wird. Die aussparung sollte zentrisch angeordnet sein. In dieser zum Luftspalt 6 offenen Aussparung 9 ist das Hall-Element 3 wieder teilweise angeordnet. In allen Ausführungsbeispielen kann das Hall-Element auch über der Aussparung bzw. über dem Bauteil 7 angeordnet sein. Weiter umfasst das weichmagnetische Bauteil 7 eine Aussparung 8 zur teilweisen Aufnahme des Permanentmagneten 2.

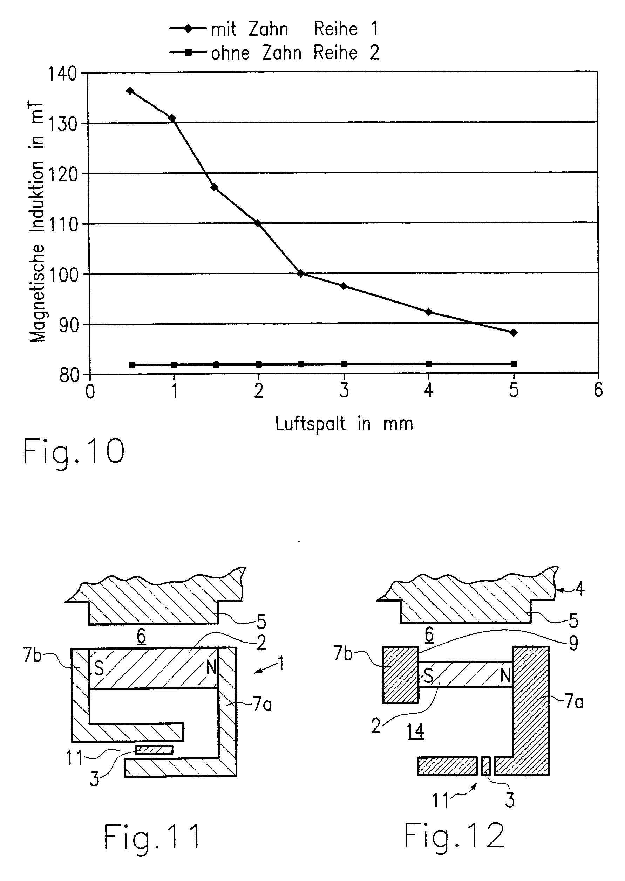

Figur 9 zeigt eine schematische Schnittansicht einer Messvorrichtung gemäß einem achten Ausführungsbeispiel. Hierbei ist das weichmagnetische Bauteil 7 aus mehreren Ringscheiben 7a und 7b aufgebaut. Die Ringscheibe 7b weist einen etwas größeren Durchmesser als die Ringscheiben 7a auf, um eine Justierung des Hall-Elements 3 zu ermöglichen. Die Höhe h von der oberen Stirnseite des Permanentmagneten 2 zur äußeren Oberfläche des Hall-Elements 3 (d.h. zur Oberfläche, welche zum Zahn 5 gerichtet ist) beträgt dabei h = 2,5 mm. Der Durchmesser des Permanentmagneten d war dabei d = 7 mm und die Höhe b des Permanentmagneten 2 war dabei b = 4,0 mm. Als Magnet 2 wurde ein Sm₂Co₁₇ - Permanentmagnet verwendet. Dabei wurden bei Messungen die in Figur 10 dargestellten Werte der magnetischen Induktion B in Abhängigkeit von der Breite des Luftspalts von der äußeren Oberfläche des Hall-Elements 3 zur Oberfläche des Zahns 5 erhalten. Hierbei zeigt die Reihe 2 die Werte, welche ohne das Vorhandenseins des Zahnes 5 im Bereich des Hall-Elements 3 erhalten wurden und die Reihe 1 die Werte, welche bei Vorhandensein eines Zahns erhalten wurden. Wie aus Figur 10 ersichtlich ist, wurde jeweils bei Vorhandenseins eines Zahns in der Nähe der Messvorrichtung eine deutliche Änderung der magnetischen Induktion B erhalten.

Figur 11 zeigt eine Messvorrichtung gemäß einem neunten Ausführungsbeispiel. Wie in Figur 11 gezeigt, ist hierbei der stabförmige Permanentmagnet 2 nicht mehr mit seiner Stirnseite in Richtung des Zahnes 5 ausgerichtet, sondern ist mit seiner Längsseite parallel zum Zahn 5 angeordnet. Als weichmagnetisches Bauteil sind dabei zwei L-förmige weichmagnetische Bauteile 7a und 7b vorgesehen, welche jeweils an den Stirnseiten des Permanentmagneten 2 am Nordpol bzw. am Südpol angeordnet sind. Zwischen den beiden Schenkeln der L-förmigen weichmagnetischen Bauteile 7a und 7b ist ein Spalt 11 gebildet, welcher parallel zum Magneten 2 ausgerichtet ist. In diesem Spalt ist ein Hall-Element 3 angeordnet. Wenn sich nun kein Zahn 5 in der Nähe des Permanentmagneten 2 befindet, wird ein großer magnetischer Fluss, ausgehend vom Permanentmagneten 2 über das erste weichmagnetische Bauteil 7a, über den Spalt 11 zum zweiten weichmagnetischen Bauteil 7b und zurück zum Permanentmagneten 2 geführt. Dadurch ergibt sich bei Nichtvorhandensein eines Zahns 5 im Bereich des Permanentmagneten 2 am Hall-Element 3 eine hohe magnetische Induktion. Wenn nun ein ferromagnetischer Zahn 5 in die Nähe des Permanentmagneten 2 gebracht wird (vgl. Figur 11) so wird zumindest ein Teil des magnetischen Flusses über den Spalt 6 zum Zahn 5 und zurück zum Permanentmagneten 2 geführt. Dadurch reduziert sich das im Hall-Element 3 induzierte Magnetfeld. Damit nimmt im Gegensatz zu den vorher beschriebenen Ausführungsbeispielen bei dem in Figur 11 dargestellten neunten Ausführungsbeispiel das Magnetfeld im Hall-Element 3 bei Anwesenheit eines Zahns 5 im Bereich des Permanentmagneten 2 einen minimalen Wert an.

Figur 12 zeigt ein zehntes Ausführungsbeispiel. Dieses Ausführungsbeispiel entspricht prinzipiell dem in Figur 11 gezeigten Ausführungsbeispiel, jedoch ist das weichmagnetische Element anders ausgebildet. Wie in Figur 12 gezeigt, ist das weichmagnetische Element aus einem L-förmigen weichmagnetischen Bauteil 7a und einem stabförmigen weichmagnetischen Bauteil 7b gebildet. Hierbei ist im Schenkel des weichmagnetischen Bauteils 7a eine Aussparung 14 gebildet, in welchem ein Hall-Element 3 angeordnet ist. Wie aus Figur 12 ersichtlich ist, geht im vorliegenden Ausführungsbeispiel der magnetische Fluss ausgehend vom Permanentmagneten 2 über das weichmagnetische Bauteil 7a, das Hall-Element 3, über einen zwischen den beiden weichmagnetischen Bauteilen 7a und 7b gebildeten Spalt 11 zum weichmagnetischen Bauteil 7b und zurück zum Permanentmagneten 2. Die weichmagnetischen Bauteile 7a bzw. 7b sind wiederum jeweils an den beiden Stirnseiten des Permanentmagneten 2 am Nord- bzw. Südpol angeordnet. Hierbei sind die beiden weichmagnetischen Bauteile 7a und 7b derart am Permanentmagneten 2 angeordnet, dass sie teilweise in den Luftspalt 6 zwischen dem Geberrad 4 und dem Permanentmagneten 2 vorstehen, um eine Aussparung 9 zu bilden.

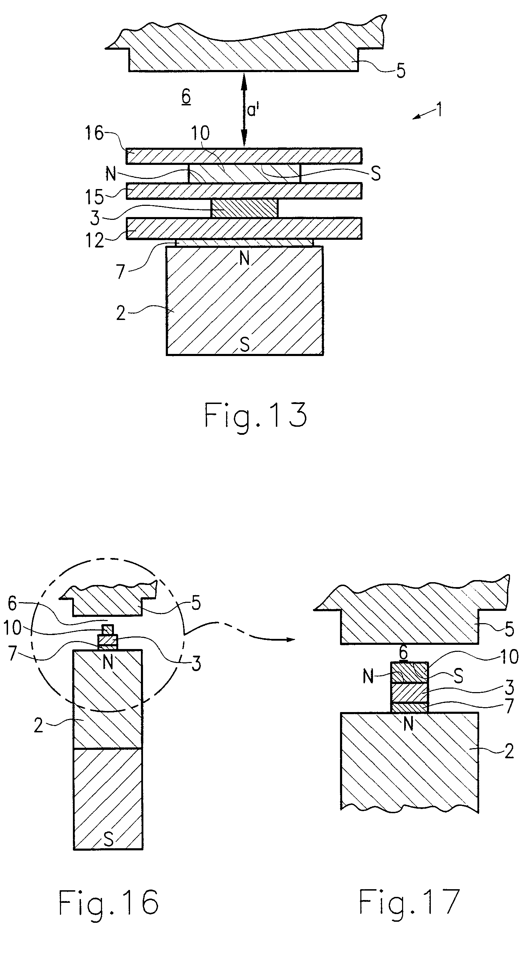

In Figur 13 ist ein elftes Ausführungsbeispiel dargestellt. Wie in Figur 13 gezeigt, umfasst die Messvorrichtung 1 einen ersten Permanentmagneten 2 sowie einen zweiten Permanentmagneten 10. Am zweiten Permanentmagneten 10 sind hierbei an dessen Stirnseiten jeweils eine 0,5 mm dicke Schicht 15, 16 aus magnetisch inaktivem Material angeordnet. Weiter ist ein auf einer Leiterplatte 12 befestigtes Hall-Element 3 vorgesehen.

Wie in Figur 13 gezeigt, ist die Leiterplatte 12 an einem weichmagnetischen Bauteil 7 befestigt, sodass das weichmagnetische Bauteil 7 zwischen dem ersten Permanentmagneten 2 und dem Hall-Element 3 angeordnet ist. Der zweite Permanentmagnet 10 ist dann zwischen dem Hall-Element 3 und einem Zahn 5 eines Geberrades angeordnet. Somit ist zwischen dem z.B. aus Samarium-Cobalt hergestellten Permanentmagneten 2 und dem Zahn 5 ausgehend von dem Permanentmagneten 2 das weichmagnetische, plattenförmige Bauteil 7 mit einer Dicke von ca. 0,2 mm, die Leiterplatte 12 mit einer Dicke von ca. 1 mm, das Hall-Element 3 mit einer Dicke von ca. 0,7 mm, eine erste Schicht 15 aus Resitex mit einer Dicke von ca. 0,5 mm, der zweite Permanentmagnet mit einer Dicke von ca. 2,5 mm und eine zweite Schicht 16 aus Resitex mit einer Dicke von 0,5 mm angeordnet.

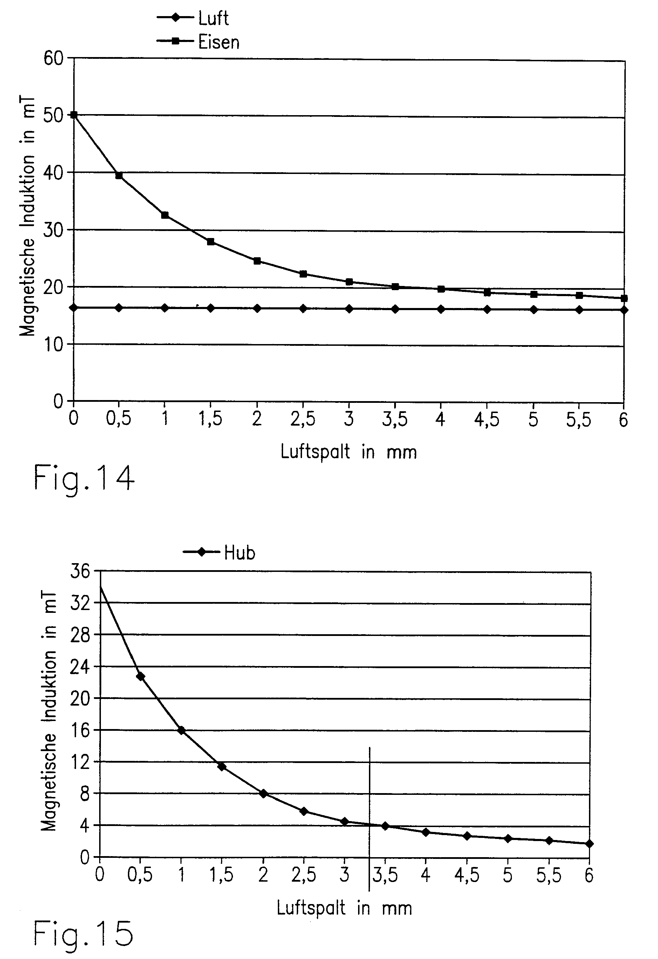

Die mit diesem Aufbau erhaltenen magnetischen Induktionen im Hall-Element 3 sind in Figur 14 dargestellt. Hierbei ist die magnetische Induktion abhängig von der Breite b des Luftspalts 6 zwischen dem Zahn 5 und der durch die Schicht 16 gebildeten Stirnfläche der Magnetstruktur aufgetragen.

In Figur 15 ist nochmals separat der magnetische Hub bei Vorhandensein eines ferromagnetischen Gegenstands 5 im Bereich der Messvorrichtung 1 in Abhängigkeit von der Breite b des Luftspalts 6 dargestellt.

Wie aus den beiden Schaubildern in den Figuren 14 und 15 ersichtlich ist, ergibt sich insbesondere im für die praktische Anwendung wichtigen Bereich der Luftspaltbreite b zwischen 1 und 4 mm jeweils ein relativ großer magnetischer Hub, welcher bei einem relativ geringen Offset-Feld (bei Nichtvorhandensein eines ferromagnetischen Gegenstands im Bereich der Messvorrichtung 1) von ca. 17 mT bereitgestellt wird (vgl. Figur 14). Somit stellt die Messvorrichtung gemäß dem in Figur 13 dargestellten Ausführungsbeispiel einen Hall-Sensor mit einem sehr geringen Offset-Feld bereit, sodass Störungen aufgrund elektromagnetischer Unverträglichkeit minimiert werden können.

Das Bauteil 7 kann entsprechend den bisher beschriebenen Varianten sowohl am Magneten 2 als auch am Magneten 10 oder auch an beiden ausgebildet sein.

In den Figuren 16 und 17 ist ein zwölftes Ausführungsbeispiel dargestellt. Wie insbesondere aus Figur 17 ersichtlich ist, weist die Messvorrichtung 1 ebenfalls einen ersten Permanentmagneten 2 und einen zweiten Permanentmagneten 10 auf. Zwischen dem ersten und dem zweiten Permanentmagnet 10 ist dabei ein Hall-Element 3 sowie ein weichmagnetisches Bauteil 7 angeordnet. Dabei befindet sich das weichmagnetische Bauteil 7 mit dem ersten Permanentmagneten 2 in Kontakt, wohingegen das Hall-Element 3 sich mit dem zweiten Permanentmagneten 10 in Kontakt befindet. Die beiden Permanentmagneten 2 und 10 sind derart angeordnet, dass ihre beiden Nordpole stirnseitig gegeneinander gerichtet sind. Entsprechend dem vorher beschriebenen Ausführungsbeispiel ist zwischen dem zweiten Permanentmagneten 10 und einem Zahn 5 eines Geberrads ein Luftspalt 6 vorgesehen. Die Funktion des in Figuren 16 und 17 dargestellten Ausführungsbeispiels entspricht im Wesentlichen der des in Figur 13 dargestellten elften Ausführungsbeispiels, sodass auf die dortigen Ausführungen verwiesen werden kann.

## Patentansprüche

1. Messvorrichtung zur berührungslosen Erfassung eines ferromagnetischen Gegenstandes (5) mit mindestens einem magnetfeldempfindlichen Element (3) und mindestens einem Magneten (2), wobei sich zwischen dem magnetfeldempfindlichen Element (3) und dem ferromagnetischen Gegenstand (5) ein Luftspalt (6) befindet, und der Magnet (2) an einer in Richtung des zu erfassenden ferromagnetischen Gegenstands (5) gerichteten Stirnseite ein weichmagnetisches Bauteil (7) aufweist, welches zwischen dem Magneten (2) und dem magnetfeldempfindlichen Element (3) angeordnet ist, wobei das weichmagnetische Bauteil (7) als kappenförmiges Element ausgebildet ist, und wobei eine Aussparung (8) des kappenförmigen Bauteils (7) zur Aufnahme des Magneten (2) dient, wobei die Aussparung (8) durch eine erste Wand des kappenförmigen Bauteils (7) definiert wird, **dadurch gekennzeichnet, dass** das kappenförmige Bauteil (7) eine Öffnung (9) aufweist, welche in Richtung des magnetfeldempfindlichen Elements (3) geöffnet ist und dass das magnetfeldempfindliche Element (3) über der Öffnung (9) angeordnet ist, wobei die Öffnung (9) durch eine zweite Wand (9a) des kappenförmigen Bauteils (7) definiert ist, wobei die zweite Wand (9a) in der Verlängerung der ersten Wand liegt.

2. Messvorrichtung nach Anspruch 1, **dadurch gekennzeichnet, dass** das kappenförmige Bauteil (7) eine halbkugelförmige Öffnung (9) aufweist, welche in Richtung des magnetfeldempfindlichen Elements (3) geöffnet ist.

3. Messvorrichtung nach Anspruch 1 und/oder 2, **dadurch gekennzeichnet, dass** das magnetfeldempfindliche Element (3) ein Hall-Element ist.

## Claims

1. Measuring apparatus for contactlessly detecting a ferromagnetic object (5), having at least one magnetic field-sensitive element (3) and at least one magnet (2), wherein there is an air gap (6) between the magnetic field-sensitive element (3) and the ferromagnetic object (5), and the magnet (2) has a soft-magnetic component (7) on an end face which is directed in the direction of the ferromagnetic object (5) which is to be detected, the said soft-magnetic component being arranged between the magnet (2) and the magnetic field-sensitive element (3), wherein the soft-magnetic component (7) is in the form of a cap-like element, and wherein a cutout (8) in the cap-like component (7) serves to receive the magnet (2), wherein the cutout (8) is defined by a first wall of the cap-like component (7), **characterized in that** the cap-like component (7) has an opening (9) which is open in the direction of the magnetic field-sensitive element (3), and **in that** the magnetic field-sensitive element (3) is arranged above the opening (9), wherein the opening (9) is defined by a second wall (9a) of the cap-like component (7), wherein the second wall (9a) is situated in the extension of the first wall.

2. Measuring apparatus according to Claim 1, **characterized in that** the cap-like component (7) has a semi-spherical opening (9) which is open in the direction of the magnetic field-sensitive element (3).

3. Measuring apparatus according to Claim 1 and/or 2, **characterized in that** the magnetic field-sensitive element (3) is a Hall element.

## Revendications

1. Dispositif de mesure pour détecter sans contact un objet ferromagnétique (5) comprenant au moins un élément (3) sensible aux champs magnétiques et au moins un aimant (2), un entrefer (6) se trouvant entre l'élément (3) sensible aux champs magnétiques et l'objet ferromagnétique (5), et l'aimant (2) présentant, au niveau d'un côté frontal orienté vers l'objet ferromagnétique (5) à détecter, un composant magnétique doux (7) qui est disposé entre l'aimant (2) et l'élément (3) sensible aux champs magnétiques, le composant magnétique doux (7) étant réalisé sous forme d'élément en forme de capuchon, et un évidement (8) du composant en forme de capuchon (7) servant à recevoir l'aimant (2), l'évidement (8) étant défini par une première paroi du composant en forme de capuchon (7),
**caractérisé en ce que** le composant en forme de capuchon (7) présente une ouverture (9) qui est ouverte dans la direction de l'élément (3) sensible aux champs magnétiques et **en ce que** l'élément (3) sensible aux champs magnétiques est disposé par-dessus l'ouverture (9), l'ouverture (9) étant définie par une deuxième paroi (9a) du composant en forme de capuchon (7), la deuxième paroi (9a) étant située dans le prolongement de la première paroi.

2. Dispositif de mesure selon la revendication 1, **caractérisé en ce que** le composant en forme de capuchon (7) présente une ouverture (9) en forme de demi-sphère, laquelle est ouverte dans la direction de l'élément (3) sensible aux champs magnétiques.

3. Dispositif de mesure selon la revendication 1 et/ou 2, **caractérisé en ce que** l'élément (3) sensible aux champs magnétiques est un élément de Hall.
